# EUROPÄISCHE PATENTSCHRIFT

(11) **EP 1 676 104 B1**
(45) Veröffentlichungstag und Bekanntmachung des Hinweises auf die Patenterteilung: **16.07.2008**
(21) Anmeldenummer: 04790311.7
(22) Anmeldetag: 12.10.2004
(51) Int. Cl.: G01G 1/14, G07F 19/00

(54) **VERFAHREN ZUR ABWICKLUNG EINES BARGELDLOSEN ZAHLUNGSVORGANGS**
METHOD FOR CARRYING OUT A PAYMENT WITHOUT USING CASH
PROCEDE POUR EFFECTUER UN PAIEMENT SANS NUMERAIRE

(30) Priorität: 15.10.2003 DE 10347990
(43) Veröffentlichungstag der Anmeldung: 05.07.2006
(73) Patentinhaber: Giesecke & Devrient GmbH, 81677 München (DE)
(72) Erfinder: BALDISCHWEILER, Michael, 81825 München (DE); FINKENZELLER, Klaus, 85774 Unterföhring (DE)
(74) Vertreter: Höhfeld, Jochen
(86) Internationale Anmeldenummer: PCT/EP2004/011423
(87) Internationale Veröffentlichungsnummer: WO 2005/038416

(56) Entgegenhaltungen:
- EP-A- 1 204 081
- WO-A-01/37467
- DE-A- 10 136 253
- GB-A- 2 329 301
- US-A- 6 013 949
- US-A- 6 144 301
- US-A1- 2002 186 133

## Beschreibung

Die Erfindung betrifft ein Verfahren zur Abwicklung eines bargeldlosen Zahlungsvorgangs. Weiterhin betrifft die Erfindung ein System zum Abwikkeln eines bargeldlosen Zahlungsvorgangs.

Bargeldlose Zahlungsvorgänge kommen vielfältig zum Einsatz und sind bereits in einer großen Anzahl von Ausgestaltungen bekannt. So ist beispielsweise aus der DE 199 57 660 A1 ein Verfahren zur Abrechnung des Fahrpreises bei der Benutzung öffentlicher Verkehrsmittel bekannt. Bei diesem Verfahren lädt ein Fahrgast an einem Automaten, der mit einer Zentralverwaltung verbunden ist, ein auf seiner scheckkartenartigen Fahrberechtigung vorgesehenes Speicherelement anhand von Bargeld oder einer Kreditkarte auf. Das öffentliche Verkehrsmittel sendet während der Fahrt Zählimpulse aus, die von einem in der Fahrberechtigung integrierten Empfänger registriert werden und jeweils dazu führen, daß ein Betrag von dem im Speicherelement abgelegten Guthaben abgebucht wird.

Aus der WO 01/37467 A ist ein Verfahren zur Durchführung eines Wareneinkaufs bekannt, das auf dem Zusammenwirken einer persönlichen Einrichtung, eines Transaktionsendgerätes, eines Produktidentifikationstags und eines Ausgangsalarmsystems beruht. Zum Erwerb einer Ware scannt ein Nutzer das an der Ware befindliche Identifikationstag und gestattet dem Transaktionsendgerät die Durchführung einer Finanztransaktion zur Bezahlung der Ware. Bei regulären Erwerb einer Ware erhält der Nutzer von dem Transaktionsendgerät einen kryptographischen Schlüssel, den er mittels einer persönlichen Einrichtung auf das Identifikationstag überträgt. Das Identifikationstag wird von dem Ausgangsalarmsystem erkannt. Durch Erkennen des Schlüssels wird beim Passieren das Ausgangsalarmsystem die Finanztransaktion ausgelöst und das Auslösen eines Alarms unterdrückt. Die Identifikationstags sind durch die Nutzer nicht wiederverwendbar.

EP 1 204 081 A beschreibt ein Verfahren zum Bezahlen von Waren, das auf einem Zusammenwirken von an den Waren befindlichen Tags, die jeweils über einen programmierbaren IC verfügen, einer Gebühreneinrichtung sowie einer persönlichen Einrichtung eines Nutzers, die ein kontaktlos arbeitendes Speichermedium beinhaltet, beruht. Eine Zahlung erfolgt, indem die Tags sowie die persönliche Einrichtung des Nutzers in den Einwirkungsbereich der Gebühreneinrichtung gebracht werden und der Nutzer der Erstattung eines ermittelten Zahlungsbetrages zustimmt. Bestandteil der Lösung ist weiterhin eine Ausgangsüberwachungseinrichtung, die regulär bezahlte Tags prüft und erkennt. Die beschriebene Lösung ist speziell auf Anbieter von Waren und Dienstleistungen zugeschnitten. Auf individuelle Nutzer ist sie nicht übertragbar.

Aus der DE 198 42 555 A1 sind ein Verfahren und eine Vorrichtung zum Kassieren eines Betrages für das befugte Benutzen eines Bereiches und/oder einer Dienstleistung bekannt. Bei Nutzungsbeginn wird ein Werttransponder, der eine individuelle Kennnummer und einen bestimmten abbuchbaren Betrag enthält, mit einer Schreib/ Lesestation einer Datenstation in Verbindung gebracht. In der Datenstation werden die Kennnummer des Werttransponders sowie Datum und Uhrzeit des Nutzungsbeginns gespeichert. Weiterhin wird durch die Datenstation ein Kautionsbetrag auf dem Werttransponder blockiert. Nach Beendigung der Nutzung wird der Werttransponder erneut mit der Datenstation in Verbindung gebracht und von der Datenstation der für die Nutzungsdauer berechnete Betrag abgebucht und die Blockierung des Kautionsbetrags aufgehoben.

Bekannt sind weiterhin tragbare Zahlungsverkehrsterminals, z.B. aus der DE 299 01 057 U1, die es erlauben, Geldbeträge von Chipkarten mit Geldkartenfunktionalität abzubuchen. Zur Vermittlung des Datenaustausches zwischen einer Chipkarte und einem Terminal können nach einem Vorschlag der WO 02/067211 A1 persönliche Assistenten (PDA) herangezogen werden, die insbesondere eine gesicherte Datenübertragung gewährleisten. Zur Visualisierung des Datenaustausches zwischen Terminal und Chipkarte können gemäß DE 198 41862 A1 weiter Handys dienen. Die Vorschläge beruhen alle auf dem Konzept, daß ein Nutzer bei Durchführung einer Zahlung unmittelbar aktiv den Abfluß eines definierten Betrages zu einem Zahlungsempfänger veranlaßt. Die auf Seiten des Zahlungsempfängers eingesetzten Terminals sind dabei personenbezogen und nicht übertragbar.

Vorgeschlagen wurde in der DE 198 42 555 A1 ferner, mittels Transpondern einen flexiblen Parkgebühreneinzug zu realisieren, indem die Festlegung der Höhe des zu entrichtenden Betrages erst nach Ablauf der Parknutzung erfolgt. Auf den Transpondern wird dabei zunächst eine vorausbezahlte Parkgebühr blockiert. Wird der Transponder vor Ablauf der Höchstparkzeit erneut an einem Leseautomaten präsentiert, wird nur ein Teil des blockierten Betrages tatsächlich einkassiert. Das Verfahren basiert auf dem Einsatz von stationären Zahlungsautomaten. Die Abwicklung einer ortsungebundenen Zahlung zwischen einer Person und einem räumlich getrennten Empfänger erlaubt es nicht.

Trotz der vielen bekannten Ausgestaltungen ist der bargeldlose Zahlungsverkehr immer noch einer Reihe von Einschränkungen unterworfen. So ist es beispielsweise wegen der Mißbrauchsgefahr in der Regel nicht erwünscht, bargeldlose Zahlungsmittel außer für den Datentransfer mit einem Endgerät aus der Hand zu geben, so daß eine Abwicklung einer bargeldlosen Zahlung in Abwesenheit des Inhabers des bargeldlosen Zahlungsmittels sehr schwierig ist.

Der Erfindung liegt die Aufgabe zugrunde, die Abwicklung von bargeldlosen Zahlungsvorgängen weiter zu verbessern.

Diese Aufgabe wird durch ein Verfahren mit der Merkmalskombination des Anspruchs 1 gelöst.

Das erfindungsgemäße Verfahren bezieht sich auf das Abwickeln eines bargeldlosen Zahlungsvorgangs zwischen einem Inhaber eines persönlichen elektronischen Zahlungsmittels und einem räumlich getrennten Zahlungsempfänger unter Verwendung eines Zwischenträgers. Die Besonderheit des erfindungsgemäßen Verfahrens besteht darin, daß zu einem ersten Zeitpunkt vom persönlichen elektronischen Zahlungsmittel des Inhabers ein Datensatz direkt oder mittels einer persönlichen Einrichtung des Inhabers auf einen elektronischen Zwischenträger übertragen wird, der bezogen auf das persönliche elektronische Zahlungsmittel des Inhabers als eine körperlich separate Einheit ausgebildet ist, und zu einem zweiten Zeitpunkt, der zeitlich hinter dem ersten Zeitpunkt liegt, eine Prüfung darauf erfolgt, ob der Datensatz oder daraus abgeleitete Daten geeignet sind den beabsichtigten Zahlungsvorgang durchzuführen. Erst danach werden der Datensatz oder daraus abgeleitete Daten vom elektronischen Zwischenträger an den Zahlungsempfänger übertragen.

Die Erfindung hat den Vorteil, daß die bargeldlose Zahlung vom Inhaber des persönlichen elektronischen Zahlungsmittels vorbereitet werden kann, ohne die Infrastruktur des Zahlungsempfängers zu nutzen und ohne daß eine Kontaktaufnahme zum Zahlungsempfänger erforderlich ist. Damit ist der Inhaber keinen Einschränkungen im Hinblick auf die räumliche Verfügbarkeit einer solchen Infrastruktur unterworfen und auch keinen Wartezeiten für die Inanspruchnahme der Infrastruktur ausgesetzt. Er muß einen zu entrichtenden Zahlungsbetrag zudem nicht zwingend genau im voraus ermitteln. Vorteilhaft können vielmehr sowohl zurückzuerstattende Überzahlungen wie die Möglichkeit zur Nachzahlung nach Prüfung durch den Empfänger vorgesehen sein. Die Beschaffung der zur Feststellung benötigten Referenzinformation kann vorteilhaft dem Empfänger überlassen bleiben. Zahlungsvorgängen können desweiteren leicht mit Zusatzinformationen, etwa einer Datums- oder Ortsangabe, versehen werden. Ein weiterer Vorteil besteht darin, daß die Ausführung der Zahlung in Abwesenheit des Inhabers durchgeführt werden kann und dazu dessen persönliches elektronisches Zahlungsmittel nicht benötigt wird.

Der Datensatz kann kryptographisch gesichert werden. Insbesondere kann der Datensatz von individuellen Daten des elektronischen Zwischenträgers und/oder einer fortlaufenden Zeichenfolge abhängen. Dadurch kann zum einen ein mißbräuchliches Kopieren des Datensatzes verhindert und zum anderen eine Rückverfolgung erleichtert werden. Weiterhin besteht auch die Möglichkeit, den Datensatz mittels eines öffentlichen Schlüssels des Zahlungsempfängers zu verschlüsseln. Dies hat den Vorteil, daß der Datensatz ausschließlich vom Zahlungsempfänger genutzt werden kann. Außerdem ist es vorteilhaft, wenn der Datensatz von persönlichen Daten des Inhabers des persönlichen elektronischen Zahlungsmittels abhängt. Auf diese Weise wird für den Zahlungsempfänger die Möglichkeit geschaffen, die Urheberschaft des Datensatzes zu ermitteln, so daß die Zahlung beispielsweise im Lastschriftverfahren erfolgen kann. Ebenso besteht auch die Möglichkeit, daß der Datensatz wenigstens einen Geldbetrag oder wenigstens eine Werteinheit repräsentiert.

Der Datensatz kann zum zweiten Zeitpunkt vollständig oder im Hinblick auf die daraus abgeleiteten Daten im elektronischen Zwischenträger gelöscht oder ungültig gemacht werden. Dadurch kann verhindert werden, daß der Datensatz bzw. die daraus abgeleiteten Daten mehrfach für verschiedene Zahlungsvorgänge verwendet werden. Insbesondere kann das erfindungsgemäße Verfahren so ausgebildet sein, daß sich der elektronische Zwischenträger zum zweiten Zeitpunkt nicht im Besitz des Inhabers des persönlichen elektronischen Zahlungsmittels befindet. Dadurch werden Zahlungsvorgänge in Abwesenheit des Inhabers des persönlichen elektronischen Zahlungsmittels ermöglicht, wobei das Mißbrauchsrisiko auf den Gegenwert begrenzt ist, den der auf den elektronischen Zwischenträger übertragene Datensatz repräsentiert.

Die Datenübertragung zum ersten Zeitpunkt und/oder zum zweiten Zeitpunkt wird vorzugsweise kontaktlos abgewickelt. Das erfindungsgemäße Verfahren kann beispielsweise bei einer Anwendung eingesetzt werden, bei der mit dem bargeldlosen Zahlungsvorgang ein Portoentgelt für eine Sendung entrichtet wird. Dabei besteht die Möglichkeit, im elektronischen Zwischenträger Angaben über Zeit und/oder Ort der Einlieferung der Sendung zu speichern.

Das erfindungsgemäße System zum Abwickeln eines bargeldlosen Zahlungsvorgangs weist ein persönliches elektronisches Zahlungsmittel eines Inhabers, einen bezogen auf das persönliche elektronische Zahlungsmittel körperlich separat ausgebildeten, transportablen elektronischen Zwischenträger und eine Empfangseinrichtung eines Zahlungsempfängers auf. Die Besonderheit des erfindungsgemäßen Systems besteht darin, daß das persönliche elektronische Zahlungsmittel so ausgebildet ist, daß es einen Datensatz direkt auf den elektronischen Zwischenträger übertragen kann, oder eine persönliche Einrichtung des Inhabers zur Übertragung des Datensatzes vom persönlichen elektronischen Zahlungsmittel auf den elektronischen Zwischenträger vorgesehen ist. Der elektronische Zwischenträger ist vorzugsweise zu mehrfachen Verwendung ausgebildet. Bei Verwendung zur Entrichtung von Porti kann dann etwa der Empfänger einer Sendung einen erhaltenen elektronischen Zwischenträger nach Wiederaufbuchen seinerseits zum Beispiel zum Frankieren benutzen.

Der elektronische Zwischenträger ist vorzugsweise als ein Transponder ausgebildet. Transponder sind kostengünstig herstellbar und erfordern keine mechanische Kontaktierung bei der Durchführung einer Datenübertragung. Das persönliche elektronische Zahlungsmittel kann als Chipkarte, insbesondere als eine elektronische Börse oder als ein Sicherheitsmodul eines Mobiltelefons ausgebildet sein.

Die Erfindung wird nachstehend anhand der in der Zeichnung dargestellten Ausführungsbeispiele näher erläutert.

Es zeigen:
- Fig. 1: eine Prinzipdarstellung für eine erfindungsgemäße Abwicklung eines bargeldlosen Zahlungsvorgangs,
- Fig. 2: eine Prinzipdarstellung für eine mögliche Realisierung einer direkten Datenübertragung zwischen der Geldkarte und dem Transponder zum ersten Zeitpunkt zur Entrichtung eines Portoentgelts
- Fig. 3: eine Prinzipdarstellung für eine mögliche Realisierung einer Datenübertragung unter Einbindung eines Mobiltelefons und
- Fig.4: ein Flußdiagramm zur Veranschaulichung einer möglichen Anwendung der erfindungsgemäßen. Lösung.

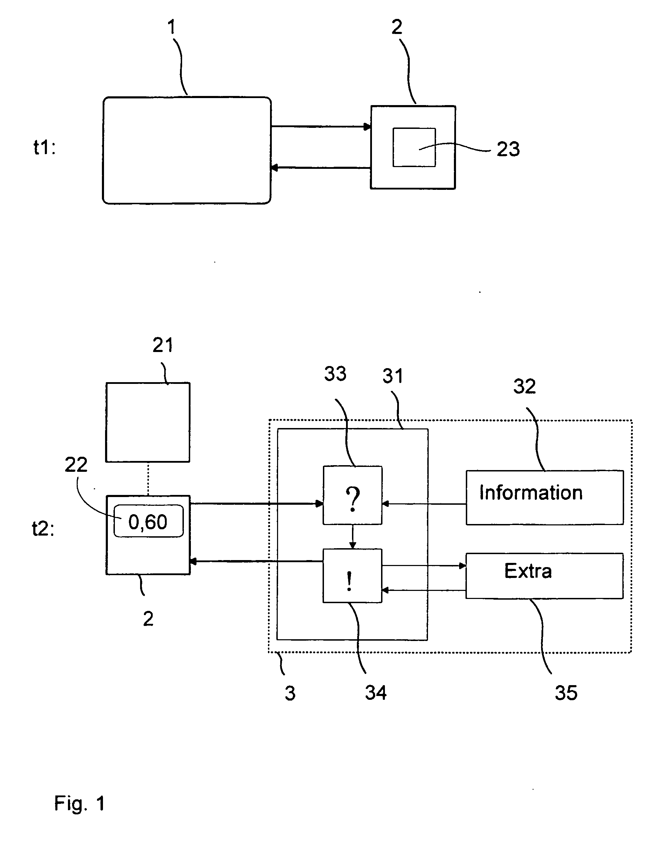

Fig. 1 zeigt eine Prinzipdarstellung für eine erfindungsgemäße Abwicklung eines bargeldlosen Zahlungsvorgangs. Im oberen Bereich der Fig. 1 sind eine an sich bekannte Geldkarte 1, d. h. eine Chipkarte mit einer Börsenfunktion, sowie ein Transponder 2 zu einem ersten Zeitpunkt t1 dargestellt. Der Transponder 2 ist klein, transportabel und vorzugsweise wiederverwendbar ausgebildet; beispielsweise kann er etikettartig gestaltet sein. Der Transponder besitzt einen nichtflüchtigen Speicher 23 zur Aufnahme von Datensätzen und Applikationen. Er kann weiter, wie im unteren Teil der Fig. 1 angedeutet, eine Anzeigeeinrichtung 22 besitzen, auf der Informationen zu einem auf dem Transponder 2 befindlichen Datensatz optisch visualisiert werden können.

Zum ersten Zeitpunkt t1 führen die Geldkarte 1 und der Transponder 2, wie durch entsprechende Pfeile angedeutet, einen Datenaustausch miteinander aus. Im Rahmen dieses Datenaustausches übermittelt die Geldkarte 1 einen Datensatz an den Transponder 2.Unter Datensatz wird dabei die einer Leistung zugeordnete Dateninformation verstanden; ein Datensatz kann informationstechnisch tatsächlich auch mehrere Datensätze umfassen. Unter Leistung wird hier ein Gegenstand 21, eine Ware oder eine Dienstleistung verstanden, für deren Bezug eine Zahlung an einen Zahlungsempfänger zu leisten ist ist.

Zum Empfang einer Zahlung verfügt der Zahlungsempfänger über eine Empfangseinrichtung 3, die aus einem Prüfgerät 31 sowie Zusatzkomponenten 32, 35 aufgebaut ist. Die Zusatzkomponenten32, 35 stellen insbesondere eine Referenzinformation zur Prüfung eines Datensatzes zur Verfügung. Prüfgerät 31 und Zusatzkomponenten 32, 35 können integriert oder auch räumlich getrennt ausgebildet sein. In einer bevorzugten Ausführung der Erfindung wird der Transponder 2 zumindest vorübergehend mit einem Gegenstand 21 verbunden, um diesem einen Wert oder eine Nutzungsangabe zuzuordnen.

Im unteren Bereich der Fig. 1 sind der Transponder 2, ein damit verbundender Gegenstand 21 sowie eine Empfangseinrichtung 3 eines Zahlungsempfängers zu einem zweiten Zeitpunkt t2 dargestellt. Der zweite Zeitpunkt t2 liegt zeitlich hinter dem ersten Zeitpunkt t1, so daß der Transponder 2 zum zweiten Zeitpunkt t2 bereits über den von der Geldkarte 1 übermittelten Datensatz verfügt.

Zum zweiten Zeitpunkt t2 führen der Transponder 1 und die Empfangseinrichtung 3 einen Datenaustausch aus. Dies ist wiederum durch Pfeile angedeutet. Im Rahmen dieses Datenaustausches wird der im Transponder 2 gespeicherte Datensatz an die Empfangseinrichtung 3 übertragen. Im Prüfgerät 31 der Empfangseinrichtung 3 wird der Datensatz zunächst darauf geprüft, Schritt 33, ob er die Leistung richtig wiedergibt. Typischerweise wird durch Vergleich mit einem Referenzdatensatz geprüft, ob der Datensatz einem für den Bezug der Leistung geforderten Zahlungsbetrag entspricht oder das Einziehen eines entsprechenden Zahlungsbetrages ermöglicht. Die für die Prüfung benötigte Referenzinformation erhält das Prüfgerät 31 von einer Informationskomponente 32, welche die Information ihrerseits zum Beispiel durch Verknüpfung der Beschaffenheit des Gegenstandes 21 mit einem tabellarischen Regelwerk ermittelt.

Gibt der Datensatz die Leistung richtig wieder, bereitet die Empfangseinrichtung 3 die Abbuchung des der Leistung entsprechenden Geldbetrages von dem Transponder 2 bzw. die Einholung über einen durch den Datensatz bestimmten Zahlungsweg vor. Dabei besteht sowohl die Möglichkeit einer kompletten als auch einer nur teilweisen Abbuchung. Entsprechend dem Ausmaß der Abbuchung wird der Geldbetrag bzw. werden die Werteinheiten im Transponder 2 gelöscht oder als ungültig gekennzeichnet, Schritt 34. Dabei können auch Vermerke zu den Umständen der Abbuchung in den Transponder 2 eingetragen werden.

Entspricht der Datensatz nicht wie vorgegeben der Leistung, teilt das Prüfgerät 32 dies in einem Schritt 34 einer Extrakomponente 35 mit, welche darauf das weitere Vorgehen für den jeweiligen Fall festlegt. In einfacher Weise kann vorgesehen sein, daß eine entsprechende Information zusammen mit einer Maßnahmenvorgabe in den Transponder 2 geschrieben wird. Wird etwa ein Minderbetrag festgestellt, so kann in den Transponder 2 zum Beispiel ein Eintrag erfolgen, daß auf einem anderen Zahlungsweg noch eine Nachzahlung erforderlich ist.

Die Einschaltung der Extrakomponente 35 kann auch im Gutfall vorgesehen sein, um Zusatzinformationen, etwa Prüfungsinformationen oder Mitteilungen, in einen Transponder 2 zu schreiben.

Auf Transponder 2 übertragene oder von Transpondern 2 erhaltene Datensätze können auch in der Empfangseinrichtung 3 gespeichert werden. Beispielsweise können sie auf einem wechselbaren, tragbaren Datenträger, insbesondere in einer figürlich nicht dargestellten Chipkarte, in der Empfangseinrichtung 3 abgelegt werden.

Je nach Anwendung, kann der Datensatz einen unterschiedlichen Inhalt aufweisen. Bei einem ersten Ausführungsbeispiel des erfindungsgemäßen Verfahrens enthält der Datensatz einen Geldbetrag oder Werteinheiten.

In einer Ausgestaltung besitzt der Transponder 2 eine eigene Anzeigeeinrichtung 22 zur optischen Ausgabe von Information im Zusammenhang mit einem auf dem Transponder 2 gespeicherten Datensatz. Die Anzeigeeinrichtung 22 kann z.B. ein bistabiles Anzeigemittel nach Art eines elektronischen Papieres sein, das während der Dauer eines Datenaustausches mit einer Empfangseinrichtung 3 von dieser mit Energie versorgt wird und dessen Einstellung auch ohne Energieversorgung bestehen bleibt. Auf der Anzeigeeinrichtung 22 zur Anzeige gebracht werden können zum Beispiel, wie in Fig. 1 angedeutet, ein Geldwert, der z.B. ein Porto oder einen Kaufpreis repräsentiert, aber auch ein Gültigkeitszustand, eine Angabe über eine etwa notwendige Nachzahlung oder eine Angabe zu einem Empfänger eines Gegenstandes 21, mit dem der Transponder 2 verbunden ist.

Um den Geldbetrag oder die Werteinheiten auf- und abbuchen zu können, kann der Transponder 2 selbst mit entsprechenden Funktionen und Bedienungseinrichtungen ausgestattet sein. Vorzugsweise sind die benötigten Funktionen und Bedienungseinrichtungen aber nicht im Transponder 2, sondern in der Geldkarte 1 eingerichtet, so daß der Transponder 2 selbst sehr einfach ausgebildet sein kann und über keine speziellen Funktionalitäten verfügen muß. Um einen Kopierschutz des im Transponder 2 gespeicherten Geldbetrags bzw. der Werteinheiten zu realisieren, kann in den zum Zeitpunkt t1 von der Geldkarte 1 an den Transponder 2 übermittelten Datensatz beispielsweise eine Seriennummer oder ein anderes Merkmal des Transponders 2 einbezogen werden.

Der Transponder 2 ist beispielsweise zur Frankierung eines Briefs einsetzbar. In diesem Fall können zusätzlich etwa das Datum und der Ort der durch die Abbuchung bewirkten Frankierung vermerkt werden und der Transponder 2 auf diese Weise mit einem zu einem konventionellen Stempelaufdruck auf eine Briefmarke korrespondierenden, elektronischen Stempel versehen werden.

Bei einem zweiten Ausführungsbeispiel des erfindungsgemäßen Verfahrens übermittelt die Geldkarte 1 dem Transponder 2 keinen Datensatz mit einem Geldbetrag oder Werteinheiten. Stattdessen wird zunächst beispielsweise die Seriennummer oder ein anderes Merkmal des Transponders 2 ausgelesen und mit einem auf der Geldkarte 1 gespeicherten persönlichen Schlüssel des Inhabers der Geldkarte 1 signiert. Um eine spätere Rückverfolgung zu erleichtern, kann bei der Erstellung des Datensatzes beispielsweise eine laufende Nummer berücksichtigt werden. Weiterhin kann der Datensatz unter Verwendung eines öffentlichen Schlüssels des vorgesehenen Zahlungsempfängers mittels eines Public-Key-Verfahrens verschlüsselt werden, um eine mißbräuchliche Verwendung des Datensatzes zu verhindern. Diese Vorgehensweise kann auch beim ersten Ausführungsbeispiel angewandt und auf die Verwendung mehrerer öffentlicher Schlüssel, insbesondere auch des öffentlichen Schlüssels des Inhabers der Geldkarte 1, erweitert werden. Dabei besteht auch die Möglichkeit, die Abbuchungsfunktion für den Geldbetrag bzw. die Werteinheiten mittels eines öffentlichen Schlüssels abzusichern. Der auf die beschriebene Weise erzeugte Datensatz wird anschließend in den Transponder 2 eingeschrieben.

Zum zweiten Zeitpunkt t2 wird der Datensatz an die Empfangseinrichtung 3 des Zahlungsempfängers übertragen. Liegt der Datensatz in verschlüsselter Form vor, wird er danach mit dem privaten Schlüssel des Zahlungsempfängers entschlüsselt. Anhand der im Datensatz enthaltenen Signatur wird der Inhaber der Geldkarte 1 ermittelt. Weiter wird durch die Empfangseinrichtung 3 der für die Leistung zu erbringende Zahlungsbetrag ermittelt. Der ermittelte Zahlungsbetrag wird sodann vom zuvor ermittelten Inhaber der Geldkarte 1 bargeldlos eingezogen. Dies kann beispielsweise durch Abbuchung von einem Bankkonto oder einem dafür vorgesehenen Guthabenkonto erfolgen.

Im Gegensatz zum ersten Ausführungsbeispiel des erfindungsgemäßen Verfahrens ist es beim zweiten Ausführungsbeispiel erforderlich, daß sich der Inhaber der Geldkarte 1 zuvor beim Zahlungsempfänger anmeldet. Im Rahmen dieser Anmeldung werden die benötigten Daten, Programme und Schlüssel auf die Geldkarte 1 geladen. Da beim zweiten Ausführungsbeispiel des erfindungsgemäßen Verfahrens von spezifischen Geldkartenfunktionen kein Gebrauch gemacht wird, kann statt der Geldkarte 1 auch beispielsweise eine vom Zahlungsempfänger ausgegebene Chipkarte ohne Geldkartenfunktion verwendet werden.

Sowohl beim ersten als auch beim zweiten Ausführungsbeispiel des erfindungsgemäßen Verfahrens wird die Zahlung an den Zahlungsempfänger nicht vor der Durchführung der Datenübertragung zwischen dem Transponder 2 und der Empfangseinrichtung 3 des Zahlungsempfängers geleistet, d. h. nicht vor dem Zeitpunkt t2. Es werden zwar bereits bei der Datenübertragung zwischen der Geldkarte 1 und dem Transponder 2 zum Zeitpunkt t1 zahlungsvorbereitende Maßnahmen durchgeführt und im Falle des ersten Ausführungsbeispiels auch ein Geldbetrag oder Werteinheiten von der Geldkarte 1 an den Transponder 2 übertragen. Gemäß der Erfindung findet dabei allerdings entweder eine direkte Datenübertragung zwischen der Geldkarte 1 und dem Transponder 2 statt, an dem keine weiteren Einrichtungen beteiligt sind, oder die Datenübertragung wird ausschließlich mittels persönlicher Einrichtungen des Inhabers der Geldkarte 1 auf indirekte Weise durchgeführt. Somit kommt es zum Zeitpunkt t1 in keinem Fall bereits zu einem Abfluß des Geldbetrags oder der Werteinheiten bzw. einer Abbuchungserlaubnis an Dritte, und insbesondere auch nicht an den vorgesehenen Zahlungsempfänger.

Im folgenden werden sowohl eine Variante mit direkter wie eine Variante mit indirekter Datenübertragung jeweils am Beispiel einer bargeldlosen Entrichtung eines Portoentgelts näher erläutert.

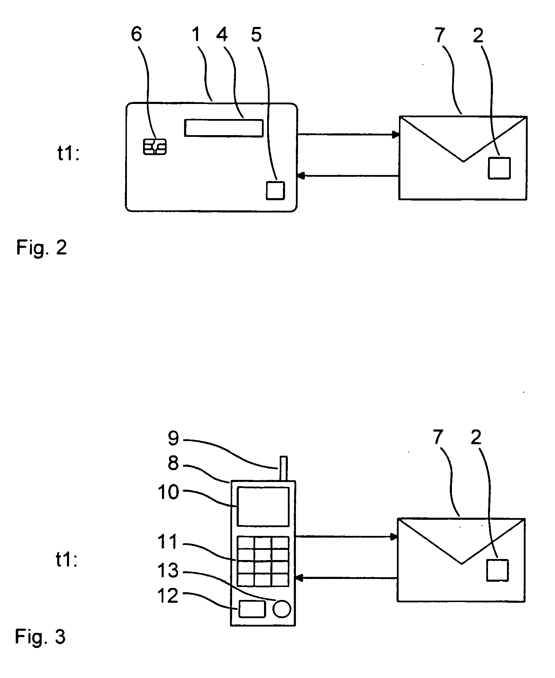

Fig. 2 zeigt eine Prinzipdarstellung für eine mögliche Realisierung einer direkten Datenübertragung zwischen der Geldkarte 1 und dem Transponder 2 zum ersten Zeitpunkt t1 zur Entrichtung eines Portoentgelts. Die Geldkarte 1 weist in diesem Fall eine Anzeigeeinrichtung 4 zur Anzeige von Informationen und einen Taster 5 zur Durchführung einer Eingabe, beispielsweise zur Beeinflussung der zu übertragenden Daten und zum Start der Datenübertragung, auf. In einer Weiterbildung der Geldkarte 1 sind mehrere Taster 5 vorgesehen, die beispielsweise eine numerische Tastatur ausbilden. Weiterhin verfügt die Geldkarte 1 noch über eine Kontaktfläche 6, die im vorliegenden Fall allerdings nicht zum Einsatz kommt, da die Datenübertragung kontaktlos erfolgt. Außerdem sind bei der Geldkarte 1 noch eine Reihe figürlich nicht dargestellter Komponenten vorgesehen, wie beispielsweise eine Sende/Empfangseinrichtung, die auf eine kontaktlose Kommunikation mit dem Transponder 2 abgestimmt ist, eine Spannungsversorgung und vor allem einen integrierten Schaltkreis, der sämtliche Abläufe ausführt. Hierzu verfügt der integrierte Schaltkreis der Geldkarte 1 über eine Software, mit der beispielsweise die Höhe des Portos ermittelt werden kann.

Der Transponder 2 ist Bestandteil eines Briefes 7, der mit Hilfe des Transponders 2 frankiert werden soll. Beispielsweise ist der Transponder 2 so klein und insbesondere so flach ausgeführt, daß er in das Papier- oder Kartonmaterial des Briefumschlags eingebettet werden kann. Das Frankieren des Briefs 7 kann erfolgen, indem ein dem Porto entsprechender Geldbetrag oder eine Signatur für eine spätere Abbuchung des Portos von der Geldkarte 1 auf den Transponder 2 übertragen wird. Zum Freistempeln des Briefs 7 wird dann jeweils auf die bei Fig. 1 beschriebene Weise die Zahlung gegenüber dem Zahlungsempfänger, hier: der Post, geleistet.

Der Transponder 2 ist vorzugsweise zur Mehrfachverwendung geeignet. Hierzu ist er lösbar mit dem Briefumschlag verbunden bzw. an der zu frankierenden Sendung befestigt und läßt sich nach einem Freistempeln für eine weitere Sendung erneut aufzubuchen. Die Wiederverwendung kann insbesondere durch den Empfänger einer Sendung erfolgen. Damit ein Aufbuchen reibungslos geschehen kann, ist in der Software der Geldkarte 1 eine Funktion vorgesehen, mit deren Hilfe die Geldkarte 1 feststellen kann, ob der Transponder 2 noch aufgebucht oder bereits freigestempelt ist; gegebenenfalls ermöglicht die Software ein erneutes Aufbuchen des Transponders 2.

Fig. 3 zeigt eine Prinzipdarstellung für eine mögliche Realisierung einer indirekten Datenübertragung unter Einbindung einer persönlichen Einrichtung 8 des Inhabers eines Zahlungsmittels 12. Bei der persönlichen Einrichtung 8 handelt es sich um ein intelligentes Gerät 8 in Gestalt eines Mobiltelefons 8. Die Ausführung als Mobiltelefon ist dabei nur beispielhaft. Das intelligente Gerät 8 kann ebenso in beliebigen anderen Ausgestaltungen vorliegen, die unter der Steuerung des Inhabers eine Datenkommunikation mit einem Transponder 2, auf dem eine gewünschte Anwendung eingerichtet ist, und damit eine indirekte Datenübertragung von dem Zahlungsmittel 12 zu dem Transponder 2 erlauben. In Betracht kommen zum Beispiel sogenannte PDAs (Persönliche Digitale Assistenten), elektronische Terminplaner, Laptops oder auch Heimcomputer. Das Mobiltelefon 8 - stellvertretend für ein intelligentes Gerät - weist eine Antenne9, eine Anzeigeeinrichtung 10, eine Tastatur 11, ein Sicherheitsmodul 12 und ein kontaktloses Lesegerät 13 zur Nahbereichskommunikation mit einem Transponder 2, vorzugsweise in Gestalt eines RFID-Lesegerätes oder einer NFC(Near Field Communication)-schnittstelle, auf.

Analog zu Fig. 2 ist als Anwendung wieder die Entrichtung eines Portoentgelts zugrundegelegt. Der Datensatz für den Transponder 2 wird nun vom Sicherheitsmodul 12 generiert, das in diesem Fall als Zahlungsmittel fungiert. Es verfügt diesbezüglich über ähnliche Funktionalitäten wie die Geldkarte 1, ist allerdings nicht in der Lage ,den Datensatz selbst kontaktlos an den Transponder 2 zu übermitteln, sondern bedient sich hierzu des Mobiltelefons 8. Insbesondere können dabei auch die Anzeigeeinrichtung 10 und die Tastatur 11 des Mobiltelefons 8 verwendet werden. Die Datenübertragung wird allerdings nicht über die übliche Luftschnittstelle des Mobiltelefons 8 abgewickelt, über die auch die Telefongespräche übertragen werden, sondern mit Hilfe des eigens für die Kommunikation mit dem Transponder 2 vorgesehenen kontaktlosen Lesegerätes 13. Das Mobilfunknetz ist an der Datenübertragung zwischen dem Sicherheitsmodul 12 und dem Transponder 2 nicht beteiligt. Bezüglich des Inhalts der übertragenen Daten gelten die Ausführungen zu Fig. 2 entsprechend.

In einer Abwandlung weist das Mobiltelefon 8 als Zahlungsmittel 12 eine Dual-Interface-Karte auf, die sowohl über eine berührende elektrische Kontaktierung als auch kontaktlos kommunizieren kann. Bei dieser Abwandlung kann das kontaktlose Lesegerät 13 entfallen, indem die kontaktlose Schnittstelle der Dual-Interface-Karte zur Kommunikation mit dem Transponder 2 genutzt wird.

Wie ausgeführt, können bei allen Ausführungsbeispielen des erfindungsgemäßen Verfahrens im Transponder 2 neben den für die Abwicklung der bargeldlosen Zahlung benötigten Daten weitere Informationen abgelegt werden. Bei der vorstehend beschriebenen Frankierung von Briefen 7 oder anderen Sendungen können sich diese Angaben beispielsweise auf Ort und Zeit der Einlieferung des Briefes 7 beziehen. Derartige Informationen können ferner auch mittels einer weiteren, separaten Komponente der Empfangseinrichtung 3, zum Beispiel mittels einer kontaktlosen Sende-/Empfangseinrichtung eingeschrieben werden, die in der Nähe des Einwurfschlitzes eines Briefkastens angeordnet ist.

Neben der bargeldlosen Entrichtung eines Portoentgelts kann die Erfindung für eine Reihe weiterer Anwendungen eingesetzt werden. In Betracht kommt etwa eine Anwendung zur Ausstellung eines elektronischen Schecks. Hierzu kann ein Datensatz auf den Transponder 2 geschrieben werden, welcher mit dem privaten Schlüssel des Inhabers der Geldkarte 1 oder einer sonstigen Chipkarte signiert und ggf. mit dem öffentlichen Schlüssel des vorgesehenen Zahlungsempfängers verschlüsselt ist. Der Datensatz stellt dann eine Zahlungsgarantie für den vorgesehenen Zahlungsempfänger dar. Eine andere mögliche Nutzung der Erfindung ist ihr Einsatz für die Vornahme Reservierungen, etwa für Theater oder öffentliche Verkehrsmittel.

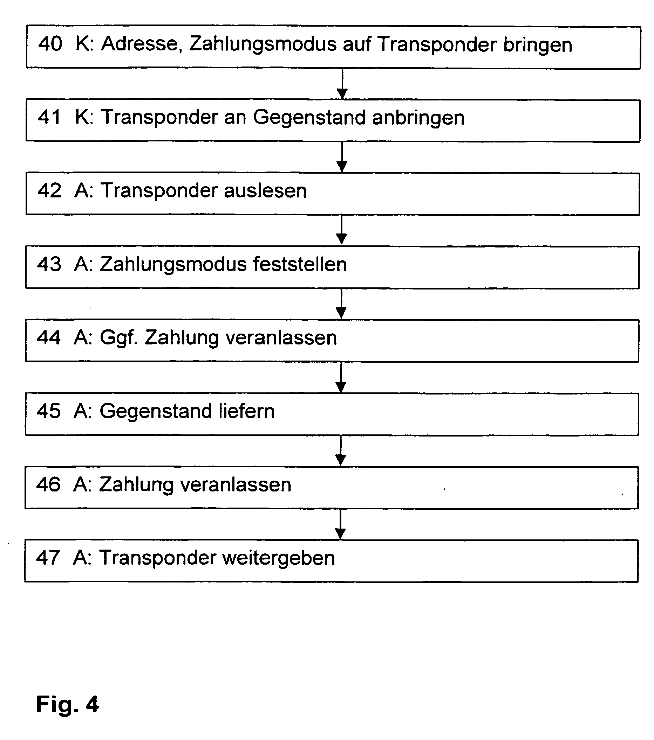

Eine weitere mögliche Anwendung der Erfindung ist in dem Flußdiagramm in Fig. 4 veranschaulicht. Der Transponder 2 wird dabei eingesetzt, um ein System zur Lieferung von Gegenständen 21 des täglichen Bedarfs, etwa von Getränken in Kisten, zu installieren. Die Gegenstände 21 sind dabei zur einfachen mechanischen Befestigung eines Transponders 2 eines Kunden K eingerichtet. Auf den Transponder 2 bringt der Kunde auf eine Weise, wie zuvor beschrieben, einen Datensatz, der zum einen eine Lieferadresse, zum anderen einen Modus für die Zahlung einer Leistung enthält, Schritt 40. Der Zahlungsmodus kann beispielsweise Nachnahme bei Lieferung aber auch Teil- oder Vorauszahlung in Geldwert sein. Den so vorbereiteten Transponder 2 befestigt der Kunde bei einem Anbieter A vor Ort lösbar an einem Gegenstand 21, den er zu erhalten wünscht, Schritt 41. Mittels einer geeigneten Empfangseinrichtung 3 liest der Anbieter später zu einem geeigneten Zeitpunkt den Transponder 2 aus, Schritt 43, und ermittelt Zahlungsmodus und Lieferadresse, Schritt 44. Entsprechend den gefundenen Angaben führt der Anbieter Zahlung und Lieferung aus, Schritt 45, 46. Der Transponder 2 kann anschließend dem Kunden zurückgegeben aber auch einem beliebeigen anderen Kunden übergeben werden, Schritt 47.

Angesichts der verschiedenen Einsatzmöglichkeiten des Transponders 2 ist in einer Weiterbildung der Erfindung vorgesehen, daß der Kommunikationspartner des Transponders 2, beispielsweise die Geldkarte 1 oder das Mobiltelefon 8 mit dem Sicherheitsmodul 12, erkennt, für welchen Zweck der Transponder 2 eingesetzt wird und eine zugehörige Softwareanwendung z.B. über Applets startet.

Gemäß einer anderen Weiterbildung des Erfindung wird die zur Kommunikation mit einem Transponder 2 benötigte Funktionalität, d.h. die benötigten Daten, Programme und Schlüssel, als Applikation auf dem Transponder 2 gespeichert und von dort bei Bedarf an ein persönliches Zahlungsmittel 1 oder ein intelligentes Gerät 8 ausgegeben. Im nichtflüchtigen Speicher 23 des Transponders 2 wird hierzu ein entsprechender Bereich bereitgehalten und zweckmäßig besonders gegen unerlaubte Zugriffe gesichert, z.B. durch Verwendung von Einmalpaßwörtern. Transponder 2 und korrespondierende Einrichtung 1, 8 verfügen jeweils über eine definierte Schnittstelle, über die eine Applikation übertragen werden kann. Vorzugsweise sind Schnittstelle und Applikationen durch kryptographische Maßnahmen, etwa durch Einsatz asymmetrischer Verschlüsselungsverfahren in Verbindung mit Zertifikaten, gegen Manipulation gesichert. Dabei können zum Beispiel Applikationen zum Schutz gegen Betrug oder vor Viren mit dem privaten Schlüssel eines Herausgebers der Applikation signiert sein. Die Signaturen sind dann mittels üblicher Verfahren zu verifizieren. Die auf einem Transponder 2 gespeicherte Funktionalität wird vor der erstmaligen Nutzung eines persönlichen Zahlungsmittels 1 oder eines intelligenten Gerätes 8 zur Übertragung eines Datensatzes an einen Transponder 2 an die jeweilige Einrichtung 1,8 übertragen. Übertragenen Applikationen können dauerhaft in der empfangenden Einrichtung 1, 8 verbleiben oder nach jeder Anwendung wieder gelöscht werden. Indem mit einer Anwendung zugleich die Funktionalität zur Nutzung bereitgestellt wird, erlaubt es die Weiterbildung, eine neue Anwendung für einen Transponder 2 schnell und einfach umzusetzen und in den Markt zu bringen.

## Patentansprüche

1. Verfahren zur bargeldlosen Ausführung eines Vorganges zum Bezahlen einer Leistung zwischen einem Inhaber eines persönlichen elektronischen Zahlungsmittels (1, 12) und einem Zahlungsempfänger, wobei zu einem ersten Zeitpunkt (t1) vom persönlichen elektronischen Zahlungsmittel (1, 12) des Inhabers ein der Leistung zugeordneter Datensatz direkt oder mittels einer persönlichen Einrichtung (8) des Inhabers auf einen elektronischen Zwischenträger (2) übertragen wird, der bezogen auf das persönliche elektronische Zahlungsmittel (1, 12) des Inhabers als körperlich separate, übertragbare Einheit ausgebildet ist, und zu einem zweiten Zeitpunkt (t2), der zeitlich hinter dem ersten Zeitpunkt (t1) liegt, der Datensatz oder daraus abgeleitete Daten von einer Empfangseinrichtung (3) des Zahlungsempfängers darauf geprüft werden, ob die Leistung richtig wiedergeben wurde, **dadurch gekennzeichnet, daß**, wenn die Leistung richtig wiedergegeben wurde, der Datensatz zum zweiten Zeitpunkt (t2) vollständig oder im Hinblick auf die daraus abgeleiteten Daten im elektronischen Zwischenträger (2) gelöscht oder ungültig gemacht wird.

2. Verfahren nach Anspruch 1, **dadurch gekennzeichnet, daß** der Datensatz oder daraus abgeleitete Daten vom elektronischen Zwischenträger (2) an den Zahlungsempfänger übertragen werden.

3. Verfahren nach Anspruch 1, **dadurch gekennzeichnet, daß** der Datensatz kryptographisch gesichert wird.

4. Verfahren nach einem der vorhergehenden Ansprüche, **dadurch gekennzeichnet, daß** der Datensatz von individuellen Daten des elektronischen Zwischenträgers (2) und/oder einer fortlaufenden Zeichenfolge abhängt.

5. Verfahren nach einem der vorhergehenden Ansprüche, **dadurch gekennzeichnet, daß** der Datensatz mittels eines öffentlichen Schlüssels des Zahlungsempfängers verschlüsselt wird.

6. Verfahren nach einem der vorhergehenden Ansprüche, **dadurch gekennzeichnet, daß** der Datensatz von persönlichen Daten des Inhabers des persönlichen elektronischen Zahlungsmittels (1, 12) abhängt.

7. Verfahren nach einem der vorhergehenden Ansprüche, **dadurch gekennzeichnet, daß** der Datensatz wenigstens einen Geldbetrag oder wenigstens eine Werteinheit repräsentiert.

8. Verfahren nach einem der vorhergehenden Ansprüche, **dadurch gekennzeichnet, daß** sich der elektronische Zwischenträger (2) zum zweiten Zeitpunkt (t2) nicht im Besitz des Inhabers des persönlichen elektronischen Zahlungsmittels (1, 12) befindet.

9. Verfahren nach einem der vorhergehenden Ansprüche, **dadurch gekennzeichnet, daß** die Datenübertragung zum ersten Zeitpunkt (t1) und/oder zum zweiten Zeitpunkt (t2) kontaktlos erfolgt.

10. Verfahren nach einem der vorhergehenden Ansprüche, **dadurch gekennzeichnet, daß** mit dem bargeldlosen Zahlungsvorgang ein Portoentgelt für eine Sendung (7) entrichtet wird.

11. Verfahren nach Anspruch 10, **dadurch gekennzeichnet, daß** der Zwischenträger (2) lösbar an einer Sendung (7) befestigt wird.

12. Verfahren nach Anspruch 10, **dadurch gekennzeichnet, daß** im elektronischen Zwischenträger (2) Angaben über Zeit und/oder Ort der Einlieferung der Sendung (7) gespeichert werden.

13. Verfahren nach einem der vorhergehenden Ansprüche, **dadurch gekennzeichnet, daß** auf dem Zwischenträger (2) eine Information im Zusammenhang mit dem Datensatz visualisiert wird.

14. Verfahren nach einem der vorhergehenden Ansprüche, **dadurch gekennzeichnet, daß** der Zwischenträger (2) lösbar an einem Gegenstand (21) befestigt wird.

15. Verfahren nach einem der vorhergehenden Ansprüche, **dadurch gekennzeichnet, daß** die zur Übertragung eines Datensatzes von dem persönlichen Zahlungsmittel (1) oder einer persönlichen Einrichtung (8) an den Zwischenträger (2) benötigte Funktionalität von dem Zwischenträger (2) an das persönliche Zahlungsmittel (1) oder die persönliche Einrichtung (8) übertragen wird.

16. System zur bargeldlosen Ausführung eines Vorganges zum Bezahlen einer Leistung, mit einem persönlichen elektronischen Zahlungsmittel (1, 12) eines Inhabers, einem bezogen auf das persönliche elektronische Zahlungsmittel (1, 12) körperlich separat ausgebildeten, unpersönlichen elektronischen Zwischenträger (2) und einer Empfangseinrichtung (3) eines Zahlungsempfängers, wobei das persönliche elektronische Zahlungsmittel (1) so ausgebildet ist, daß es einen der Leistung zugeordneten Datensatz direkt auf den elektronischen Zwischenträger (2) übertragen kann oder eine persönliche Einrichtung (8) des Inhabers zur Übertragung des Datensatzes vom persönlichen elektronischen Zahlungsmittel (12) auf den elektronischen Zwischenträger (2) vorgesehen ist, und die Empfangseinrichtung (3) dazu ausgebildet ist, den Datensatz darauf zu prüfen, ob er die Leistung richtig wiedergibt, **dadurch gekennzeichnet, daß** die Empfangseinrichtung (3) weiter dazu ausgebildet ist, den Datensatz vollständig zu löschen oder ungültig zu machen, wenn er die Leistung richtig wiedergibt.

17. System nach Anspruch 16, **dadurch gekennzeichnet, daß** der elektronische Zwischenträger (2) als ein Transponder ausgebildet ist.

18. System nach Anspruch 16, **dadurch gekennzeichnet, daß** der elektronische Zwischenträger (2) zur wiederholten Übertragung von Datensätzen eingerichtet ist.

19. System nach Anspruch 16, **dadurch gekennzeichnet, daß** auf dem elektronischen Zwischenträger (2) die zur Übertragung eines Datensatzes von dem persönlichen Zahlungsmittel (1) oder einer persönlichen Einrichtung (8) an den Zwischenträger (2) benötigte Funktionalität als Applikation auf dem Zwischenträger (2) gespeichert ist.

20. System nach Anspruch 16, **dadurch gekennzeichnet, daß** der elektronische Zwischenträger (2) eine Anzeigeeinrichtung (22) zur Visualisierung einer Information im Zusammenhang mit einem Datensatz aufweist.

21. System nach Anspruch 16, **dadurch gekennzeichnet, daß** die persönliche Einrichtung (8) ein intelligentes Gerät ist, das über ein Lesegerät (13) zur Nahbereichskommunikation mit einem Transponder (2) verfügt.

22. System nach Anspruch 16, **dadurch gekennzeichnet, daß** das intelligente Gerät (8) ein Mobiltelefon ist.

23. System nach Anspruch 16, **dadurch gekennzeichnet, daß** das persönliche elektronische Zahlungsmittel (1,12) als eine Chipkarte, insbesondere als eine elektronische Börse, oder als ein Sicherheitsmodul eines Mobiltelefones (8) ausgebildet ist.

24. System nach Anspruch 16, **dadurch gekennzeichnet, daß** die Empfangseinrichtung (3) ein Prüfgerät (31) sowie mindestens eine Zusatzkomponente (32, 35) aufweist, welche eine Referenzinformation zur Prüfung eines Datensatzes zur Verfügung stellt.

## Claims

1. A method for cashless processing of a transaction for paying for a service between an owner of a personal electronic means of payment (1, 12) and a payee, whereby at a first time (t1) a data record assigned to the service is transmitted from the owner's personal electronic means of payment (1, 12), directly or by means of a personal device (8) of the owner, to an electronic intermediate carrier (2) which is formed as a transferable unit physically separate from the owner's personal electronic means of payment (1, 12), and at a second time (t2) which is later than the first time (t1) the data record or data derived therefrom are checked by a receiving device (3) of the payee as to whether the service was represented correctly, **characterized in that** if the service was represented correctly the data record is deleted or invalidated at the second time (t2) completely or with regard to the data derived therefrom in the electronic intermediate carrier (2).

2. The method according to claim 1, **characterized in that** the data record or data derived therefrom are transmitted from the electronic intermediate carrier (2) to the payee.

3. The method according to claim 1, **characterized in that** the data record is secured cryptographically.

4. The method according to any of the previous claims, **characterized in that** the data record depends on individual data of the electronic intermediate carrier (2) and/or a consecutive character string.

5. The method according to any of the previous claims, **characterized in that** the data record is encrypted by means of a public key of the payee.

6. The method according to any of the previous claims, **characterized in that** the data record depends on personal data of the owner of the personal electronic means of payment (1, 12).

7. The method according to any of the previous claims, **characterized in that** the data record represents at least one amount of money or at least one unit of value.

8. The method according to any of the previous claims, **characterized in that** the electronic intermediate carrier (2) is not in the possession of the owner of the personal electronic means of payment (1, 12) at the second time (t2).

9. The method according to any of the previous claims, **characterized in that** the data transmission is effected contactlessly at the first time (t1) and/or at the second time (t2).

10. The method according to any of the previous claims, **characterized in that** the cashless payment transaction is used for paying postage for mail (7).

11. The method according to claim 10, **characterized in that** the intermediate carrier (2) is fastened detachably to mail (7).

12. The method according to claim 10, **characterized in that** information on the time and/or place of the delivery of the mail (7) is stored in the electronic intermediate carrier (2).

13. The method according to any of the previous claims, **characterized in that** information in connection with the data record is visualized on the intermediate carrier (2).

14. The method according to any of the previous claims, **characterized in that** the intermediate carrier (2) is fastened detachably to an object (21).

15. The method according to any of the previous claims, **characterized in that** the functionality required for transmitting a data record from the personal means of payment (1) or a personal device (8) to the intermediate carrier (2) is transmitted from the intermediate carrier (2) to the personal means of payment (1) or the personal device (8).

16. A system for cashless processing of a transaction for paying for a service, having a personal electronic means of payment (1, 12) of an owner, an impersonal electronic intermediate carrier (2) formed to be physically separate from the personal electronic means of payment (1, 12), and a receiving device (3) of a payee, whereby the personal electronic means of payment (1) is formed so that it can transmit a data record assigned to the service directly to the electronic intermediate carrier (2), or a personal device (8) of the owner is provided for transmitting the data record from the personal electronic means of payment (12) to the electronic intermediate carrier (2), and the receiving device (3) is formed to check the data record as to whether it represents the service correctly, **characterized in that** the receiving device (3) is further formed to delete or invalidate the data record completely if it represents the service correctly.

17. The system according to claim 16, **characterized in that** the electronic intermediate carrier (2) is formed as a transponder.

18. The system according to claim 16, **characterized in that** the electronic intermediate carrier (2) is set up for repeated transmission of data records.

19. The system according to claim 16, **characterized in that** the functionality required for transmitting a data record from the personal means of payment (1) or a personal device (8) to the intermediate carrier (2) is stored as an application on the electronic intermediate carrier (2) on the intermediate carrier (2).

20. The system according to claim 16, **characterized in that** the electronic intermediate carrier (2) has a display device (22) for visualizing information in connection with a data record.

21. The system according to claim 16, **characterized in that** the personal device (8) is an intelligent device having a reading device (13) for close range communication with a transponder (2).

22. The system according to claim 16, **characterized in that** the intelligent device (8) is a mobile telephone.

23. The system according to claim 16, **characterized in that** the personal electronic means of payment (1, 12) is formed as a chip card, in particular as an electronic purse, or as a security module of a mobile telephone (8).

24. The system according to claim 16, **characterized in that** the receiving device (3) has a checking device (31) as well as at least one additional component (32, 35) which provides reference information for checking a data record.

## Revendications

1. Procédé pour réaliser sans espèces un processus de paiement d'une prestation entre un détenteur d'un moyen de paiement (1, 12) électronique personnel et un destinataire de paiement, à un premier moment (t1), un jeu de données associé à la prestation étant directement transmis ou au moyen d'un dispositif personnel (8) du détenteur depuis le moyen de paiement (1, 12) électronique personnel du détenteur à un support intermédiaire (2) électronique, qui est réalisé comme unité transmissible, séparée physiquement par rapport au moyen de paiement (1, 12) électronique personnel du détenteur, et à un second moment (t2) qui se trouve temporellement après le premier moment (t1), le jeu de données ou des données en découlant sont vérifiés par un dispositif de réception (3) du destinataire de paiement suivant si la prestation a correctement été restituée, **caractérisé en ce que** si la prestation a correctement été restituée, le jeu de données ou respectivement les données en découlant est complètement supprimé ou invalidé au second moment (t2) dans le support intermédiaire (2) électronique.

2. Procédé selon la revendication 1, **caractérisé en ce que** le jeu de données ou des données en découlant sont transmises du support intermédiaire électronique (2) au destinataire de paiement.

3. Procédé selon la revendication 1, **caractérisé en ce que** le jeu de données est protégé par cryptographie.

4. Procédé selon l'une des revendications précédentes, **caractérisé en ce que** le jeu de données dépend de données individuelles du support intermédiaire (2) électronique et/ou d'une chaîne de caractères continue.

5. Procédé selon l'une quelconque des revendications précédentes, **caractérisé en ce que** le jeu de données est crypté au moyen d'une clé publique du destinataire de paiement.

6. Procédé selon l'une des revendications précédentes, **caractérisé en ce que** le jeu de données dépend des données personnelles du détenteur du moyen de paiement (1, 12) électronique personnel.

7. Procédé selon l'une des revendications précédentes, **caractérisé en ce que** le jeu de données représente au moins une somme d'argent ou au moins une unité de valeur.

8. Procédé selon l'une des revendications précédentes, **caractérisé en ce que** le support intermédiaire (2) électronique ne se trouve pas en possession du détenteur du moyen de paiement (1, 12) électronique personnel au second moment (t2).

9. Procédé selon l'une des revendications précédentes, **caractérisé en ce que** la transmission des données est effectuée sans contact au premier moment (t1) et/ou au second moment (t2).

10. Procédé selon l'une des revendications précédentes, **caractérisé en ce qu'**un paiement de port pour un envoi (7) est réglé avec le processus de paiement sans espèces.

11. Procédé selon la revendication 10, **caractérisé en ce que** le support intermédiaire (2) est fixé de manière amovible sur un envoi (7).

12. Procédé selon la revendication 10, **caractérisé en ce que** dans le support intermédiaire (2) électronique sont enregistrées des indications sur le temps et/ou le lieu de la livraison de l'envoi (7).

13. Procédé selon l'une des revendications précédentes, **caractérisé en ce qu'**une information en rapport avec le jeu de données est visualisée sur le support intermédiaire (2).

14. Procédé selon l'une des revendications précédentes, **caractérisé en ce que** le support intermédiaire (2) est fixé de manière amovible sur un objet (21).

15. Procédé selon l'une des revendications précédentes, **caractérisé en ce que** la fonctionnalité nécessaire à la transmission d'un jeu de données du moyen de paiement (1) personnel ou d'un dispositif personnel (8) au support intermédiaire (2) est transmise du support intermédiaire (2) au moyen de paiement (1) personnel ou au dispositif personnel (8).

16. Système pour réaliser sans espèces un processus de paiement d'une prestation avec un moyen de paiement (1, 12) électronique personnel d'un détenteur, avec un support intermédiaire (2) électronique non personnel, réalisé de manière séparée physiquement par rapport au moyen de moyen de paiement (1, 12) électronique personnel et avec un dispositif de réception (3) d'un destinataire de paiement, le moyen de paiement (1) électronique personnel étant réalisé de telle sorte qu'il puisse transmettre un jeu de données associé à la prestation directement au support intermédiaire (2) électronique ou un dispositif personnel (8) du détenteur étant prévu pour la transmission du jeu de données du moyen de paiement (12) électronique personnel au support intermédiaire (2) électronique et le dispositif de réception (3) étant réalisé afin de vérifier dans le jeu de données s'il restitue correctement la prestation, **caractérisé en ce que** le dispositif de réception (3) est réalisé en outre afin de supprimer complètement ou d'invalider le jeu de données lorsqu'il restitue la prestation correctement.

17. Système selon la revendication 16, **caractérisé en ce que** le support intermédiaire (2) électronique est réalisé comme un transpondeur.

18. Système selon la revendication 16, **caractérisé en ce que** le support intermédiaire (2) électronique est paramétré pour transmettre de manière répétée des jeux de données.

19. Système selon la revendication 16, **caractérisé en ce que** sur le support intermédiaire (2) électronique est enregistrée la fonctionnalité nécessaire à la transmission d'un jeu de données du moyen de paiement (1) personnel ou d'un dispositif (8) personnel au support intermédiaire (2), comme application sur le support intermédiaire (2).

20. Système selon la revendication 16, **caractérisé en ce que** le support intermédiaire (2) électronique présente un dispositif d'affichage (22) pour visualiser une information en rapport avec un jeu de données.

21. Système selon la revendication 16, **caractérisé en ce que** le dispositif personnel (8) est un appareil intelligent qui dispose d'un lecteur (13) pour la communication locale avec un transpondeur (2).

22. Système selon la revendication 16, **caractérisé en ce que** l'appareil intelligent (8) est un téléphone mobile.

23. Système selon la revendication 16, **caractérisé en ce que** le moyen de paiement (1, 12) électronique personnel est réalisé comme une carte à puce, notamment comme une bourse électronique ou comme un module de sécurité d'un téléphone mobile (8).

24. Système selon la revendication 16, **caractérisé en ce que** le dispositif de réception (3) présente un appareil de contrôle (31) ainsi qu'au moins un composant supplémentaire (32, 35) qui met à disposition une information de référence pour la vérification d'un jeu de données.
